(19) **Europäisches Patentamt** / **European Patent Office** / **Office européen des brevets**

(11) **EP 4 661 574 A1**

(12) **EUROPEAN PATENT APPLICATION**
published in accordance with Art. 153(4) EPC

(43) Date of publication:
**10.12.2025 Bulletin 2025/50**

(21) Application number: **24750589.4**

(22) Date of filing: **01.02.2024**

(51) International Patent Classification (IPC):
**H04W 72/56** (2023.01)    **H04W 72/12** (2023.01)
**H04W 72/231** (2023.01)    **H04W 72/232** (2023.01)
**H04W 56/00** (2009.01)    **H04W 72/21** (2023.01)
**H04W 52/28** (2009.01)    **H04L 5/00** (2006.01)
**H04W 74/08** (2024.01)

(52) Cooperative Patent Classification (CPC):
**H04L 5/00; H04W 52/28; H04W 56/00;
H04W 72/12; H04W 72/21; H04W 72/231;
H04W 72/232; H04W 72/56; H04W 74/08**

(86) International application number:
**PCT/KR2024/001531**

(87) International publication number:
**WO 2024/162792 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023 KR 20230015163
08.02.2023 KR 20230016947
13.02.2023 KR 20230018921**

(71) Applicant: **LG Electronics Inc.
Yeongdeungpo-gu
Seoul 07336 (KR)**

(72) Inventors:
• **GO, Seongwon**
  **Seoul 06772 (KR)**

• **KO, Hyunsoo**
  **Seoul 06772 (KR)**
• **KIM, Hyungtae**
  **Seoul 06772 (KR)**
• **YANG, Suckchel**
  **Seoul 06772 (KR)**
• **KANG, Jiwon**
  **Seoul 06772 (KR)**
• **PARK, Haewook**
  **Seoul 06772 (KR)**

(74) Representative: **Jung, Minkyu
Wuesthoff & Wuesthoff
Patentanwälte und Rechtsanwalt PartG mbB
Schweigerstraße 2
81541 München (DE)**

(54) **METHOD FOR TRANSMITTING/RECEIVING UPLINK IN WIRELESS COMMUNICATION SYSTEM AND DEVICE THEREFOR**

(57) A method performed by a user equipment (UE) ccording to an embodiment of the present disclosure includes receiving configuration information and transmitting a first uplink signal related to a first TAG and/or a second uplink signal related to a second TAG. Based on the first uplink signal and the second uplink signal being overlapped, the first uplink signal and/or the second uplink signal are transmitted based on a rule. The rule is related to a Simultaneous Transmission across Multiple Panels (STxMP).

[FIG. 3]

```
            Start

Receive configuration information        — S310

Transmit first uplink signal and/or      — S320
      second uplink signal

             End
```

EP 4 661 574 A1

**Description**

[TECHNICAL FIELD]

The present disclosure relates to a method and device for transmitting and receiving uplink in a wireless communication system.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CC/BWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed. To support TRP-specific TA (i.e., to support two TAs for two TRPs), two TAGs may be configured within one serving cell.

[DISCLOSURE]

[TECHNICAL PROBLEM]

As described above, when two TAs (TAGs) are managed, UL signals (e.g., UL channels/RSs) based on different TAs (TAGs) may collide. Ambiguity may arise as to how to handle the colliding/overlapping UL signals.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) in a wireless communication system according to an embodiment of the present disclosure comprises receiving configuration information and transmitting a first uplink signal related to a first TAG and/or a second uplink signal related to a second TAG.

Based on the configuration information, i) first COntrol REsource SETs (CORESETs) related to a first CORESET pool index and ii) second CORESETs related to a second CORESET pool index are configured. The first CORESETs are related to a first TCI state, and the second CORESETs are related to a second TCI state.

The first TCI state is related to a first timing advance group (TAG), and the second TCI state is related to a second TAG.

Based on the first uplink signal and the second uplink signal being overlapped, the first uplink signal and/or the second uplink signal are transmitted based on a rule. The rule is related to a Simultaneous Transmission across Multiple Panels (STxMP).

The rule may be defined based on at least one of i) a transmission start time of each uplink signal, ii) a scheduling time of each uplink signal, iii) a minimum processing time related to an uplink (UL) cancellation, iv) an overlapped time duration of the first uplink signal and the second uplink signal, v) a capability of the UE related to the STxMP, and/or vi) a total transmission power related to the overlapped time duration.

Based on i) the STxMP being supported by the UE, and ii) the total transmission power being less than or equal to a maximum transmission power of the UE: the first uplink signal and the second uplink signal may be transmitted.

Based on i) the STxMP being supported by the UE, and ii) the total transmission power being greater than a maximum transmission power of the UE: the first uplink signal or the second uplink signal may be transmitted.

Based on i) the STxMP being supported by the UE, and ii) the total transmission power being greater than a maximum transmission power of the UE: the first uplink signal and the second uplink signal may be transmitted, and a lower priority signal among the first uplink signal and the second uplink signal may be transmitted based on a scaled transmission power.

Based on a transmission start time of the first uplink signal or the second uplink signal being earlier than a transmission start time of the second uplink signal or the first uplink signal: the first uplink signal or the second uplink signal may be transmitted.

Based on a scheduling time of the first uplink signal or the second uplink signal being earlier than a scheduling time of the second uplink signal or the first uplink signal: the first uplink signal or the second uplink signal may be transmitted.

Based on a transmission start time of the first uplink signal or the second uplink signal being earlier than a time based on the minimum processing time: the first uplink signal or the second uplink signal may be transmitted.

Based on the overlapped time duration being a cyclic prefix (CP) related to the first uplink signal or the second uplink signal: the first uplink signal and the second uplink signal may be transmitted.

The first uplink signal or the second uplink signal may be transmitted in a resource region excluding the CP.

The rule may be applied to the first uplink signal and the second uplink signal based on a dynamic scheduling.

The first uplink signal and the second uplink signal based on a semi-static scheduling may be scheduled so as not to overlap each other.

i) The first uplink signal or the second uplink signal based on a dynamic scheduling may be scheduled so as not to overlap ii) the second uplink signal or the first uplink signal based on a semi-static scheduling.

The first uplink signal may be based on a first uplink timing related to the first TAG, and the second uplink signal may be based on a second uplink timing related to the second TAG.

The first uplink signal or the second uplink signal with a high priority may be transmitted, and the second uplink signal or the first uplink signal with a low priority may be i) dropped or ii) dropped in the overlapped time duration.

A user equipment (UE) operating in a wireless communication according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station in a wireless communication system according to another embodiment of the present disclosure comprises transmitting configuration information and receiving a first uplink signal related to a first TAG and/or a second uplink signal related to a second TAG.

Based on the first uplink signal and the second uplink signal being overlapped, the first uplink signal and/or the second uplink signal are received based on a rule. The rule is related to a Simultaneous Transmission across Multiple Panels (STxMP).

A base station operating in a wireless communication according to another embodiment of the present disclosure comprises one or more transceivers, one or more processors, and one or more memories connected to the one or more processors and configured to store instructions.

The instructions, based on being executed by the one or more processors, are configured to allow the one or more processors to perform all steps of any one of the methods.

[ADVANTAGEOUS EFFECTS]

According to embodiments of the present disclosure, when a first uplink signal related to a first TAG and a second uplink signal related to a second TAG overlap, the first uplink signal and/or the second uplink signal determined based on a rule are transmitted.

Therefore, when uplink channels/signals based on different TAGs collide, ambiguity in UE operation regarding how to process the uplink channels/signals can be resolved.

In addition, even for a UE supporting STxMP, only the uplink channels/signals determined by the rule can be transmitted. That is, compared to the case where the overlapped uplink channels/signals are always transmitted simultaneously based on STxMP capability, UL transmission can be performed more effectively by considering the transmit power in an overlapped region.

In addition, since the overlapped uplink signals based on the rule can be transmitted without dropping, a resource utilization can be improved compared to when one of the overlapped uplink signals is dropped based on an existing defined priority (for collision handling).

Effects that could be achieved with the present disclosure are not limited to those that have been described hereinabove merely by way of example, and other effects and advantages of the present disclosure will be more clearly understood from the following description by a person skilled in the art to which the present disclosure pertains.

[DESCRIPTION OF THE DRAWINGS]

FIG. 1 illustrates MAC RAR according to an embodiment of the present disclosure.
FIG. 2 illustrates a timing advance command MAC CE according to an embodiment of the present disclosure.
FIG. 3 is a flowchart illustrating a method performed by a UE according to an embodiment of the present disclosure.
FIG. 4 is a flowchart illustrating a method performed by a base station according to another embodiment of the present disclosure.
FIG. 5 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. In this case, the UE is indicated by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used in resource 1 and the UL TCI state used in resource 2 are indicated. The UL MTRP URLLC may be applied to the PUSCH/PUCCH.

SDCI or MDCI based MTRP Transmission

From a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g. ID), etc. for distinguishing CORESETs for each TRP/panel. In addition, the CORESET group may be a group/union of CORESETs classified by indexes/identification information (e.g. ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPool-lIndex). ControlResourceSet (i.e., CORESET) may be configured via higher layer signaling (e.g., RRC).

<Meaning of TCI state/ beam indication>

In addition, in the methods proposed by the present disclosure below, a meaning of using (/mapping) a specific TCI state (or TCI) when receiving data/DCI/UCI for a certain frequency/time/space resource is as follows.

For DL, using (mapping) the specific TCI state (or TCI) when receiving data/DCI/UCI for the certain frequency/time/space resource may mean estimating a channel from a DMRS using the QCL type and QCL RS indicated by the DL TCI state in the frequency/time/space resources, and receiving/demodulating data/DCI with the estimated channel.

For UL, using (mapping) the specific TCI state (or TCI) when receiving data/DCI/UCI for the certain frequency/time/spatial resource may mean transmitting/modulating the DMRS and data/UCI by using a Tx beam and/or Tx power indicated by the UL TCI state.

The UL TCI state may contain Tx beam or Tx power information of the UE, and spatial relation info may be configured to the UE through other parameters instead of the TCI state. The UL TCI state may mean spatial relation info of the SRS resource which may be directly indicated by UL grant DCI or is indicated through the SRI field of the UL grant DCI.

Alternatively, the UL TCI state may mean OL Tx power control parameters (j: index for open loop parameters Po & alpha (maximum 32 parameter value sets per cell), q_d: index of DL RS resource for PL measurement (maximum 4 measurements per cell), and 1: closed loop power control process index (maximum 2 processes per cell)) connected to a value indicated through the SRI field of the UL grant DCI. Alternatively, in R17 NR, UL TCI may be indicated using DL grant DCI.

<TRP classification-related extension description>

For convenience of description, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs may be perceived by the UE as different TCI states (related to different CORESET pool indices).

For example, receiving, by the UE, the data/DCI using the first TCI state related to the first CORESET pool index means that the data/DCI is received from TRP 1. For example, transmitting, by the UE, the data/DCI using the first TCI state related to the first CORESET pool index means that the data/DCI is transmitted to TRP 1.

For example, receiving, by the UE, the data/DCI using the second TCI state related to the second CORESET pool index means that the data/DCI is received from TRP 2. For example, transmitting, by the UE, the data/DCI using the second TCI state related to the second CORESET pool index means that the data/DCI is transmitted to TRP 2.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be based on Table 1 below.

[Table 1]

| |
| --- |
| Uplink frame number *i* for transmission from the UE shall start $T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}}$ before the start of the corresponding downlink frame at the UE where<br><br>- $N_{\mathrm{TA}}$ and $N_{TA,offset}$ are given by clause 4.2 of [5, TS 38.213], except for msgA transmission on PUSCH where $N_{TA} = 0$ shall be used;<br><br>- $N_{\mathrm{TA,adj}}^{\mathrm{common}}$ given by clause 4.2 of [5, TS 38.213] is derived from the higher-layer parameters *TACommon, TACommonDrifi,* and *TACommonDriftVariation* if configured, otherwise $N_{\mathrm{TA,adj}}^{\mathrm{common}} = 0$ ; |

(continued)

> - $N_{TA,adj}^{UE}$ given by clause 4.2 of [5, TS 38.213] is computed by the UE based on UE position and serving-satellite-ephemeris-related higher-layers parameters if configured, otherwise $N_{TA,adj}^{UE} = 0$.

In Table 1, $T_{TA}$ may be calculated/determined based on $N_{TA}$ and $N_{TA,offset}$. $N_{TA}$ and $N_{TA,offset}$ may be configured/applied as follows.

$N_{TA}$: 1) configuring through a random access response (RAR) and 2) configuring through timing advance command (MAC-CE)
$N_{TA,offset}$: 1) configuring a specific value per serving cell and 2) applying a pre-defined value based on duplex mode/FR suitably to the serving cell

A method of configuring/applying $N_{TA,offset}$ and $N_{TA}$ described above is described in detail below.

$N_{TA,offset}$

Case 1) Method of configuring a specific value per serving cell

For example, a UE may receive configuration information (e.g., ServingCellConfigCommon Information) including information on NTA,offset from a base station. The configuration information may be received based on RRC signaling. Table 2 below shows the configuration information.

【Table 2】

---

– *ServingCellConfigCommon*

The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync.

***ServingCellConfigCommon* information element**

```
-- ASN1START
-- TAG-SERVINGCELLCONFIGCOMMON-START

ServingCellConfigCommon ::=        SEQUENCE {
    physCellId              PhysCellId                          OPTIONAL,  -- Cond
HOAndServCellAdd,
    downlinkConfigCommon         DownlinkConfigCommon                   OPTIONAL,  --
Cond HOAndServCellAdd
    uplinkConfigCommon          UplinkConfigCommon                  OPTIONAL,  --
Need M
```

| | | |
|---|---|---|
| supplementaryUplinkConfig | UplinkConfigCommon | OPTIONAL, -- Need S |
|    n-TimingAdvanceOffset | ENUMERATED { n0, n25600, n39936 } | OPTIONAL, -- Need S |
| | (…) | |
| } | | |
| -- TAG-SERVINGCELLCONFIGCOMMON-STOP | | |
| -- ASN1STOP | | |
| ***n-TimingAdvanceOffset*** <br><br> The N_TA-Offset to be applied for all uplink transmissions on this serving cell. If the field is absent, the UE applies the value defined for the duplex mode and frequency range of this serving cell. See TS 38.133 [14], table 7.1.2-2. | | |

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 3 below shows the value of $N_{TA,offset}$.

【Table 3】

| Table 7.1.2-2: The Value of $N_{TA\,offset}$ | |
|---|---|
| **Frequency range and band of cell used for uplink transmission** | $N_{TA\,offset}$ **(Unit: $T_C$)** |
| FR1 FDD or TDD band with neither E-UTRA–NR nor NB-IoT–NR coexistence case | 25600 (Note 1) |
| FR1 FDD band with E-UTRA–NR and/or NB-IoT–NR coexistence case | 0 (Note 1) |
| FR1 TDD band with E-UTRA–NR and/or NB-IoT–NR coexistence case | 39936 (Note 1) |
| FR2 | 13792 |

[1] Note 1: The UE identifies $N_{TA\,offset}$ based on the information n-TimingAdvanceOffset as specified in TS 38.331 [2]. If UE is not provided with the information n-TimingAdvanceOffset, the default value of $N_{TA\,offset}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{TA\,offset}$ can also be provided for a FDD serving cell.

[2] Note 2: Void

$N_{TA}$

Case 1) Method of configuring through a random access response (RAR)

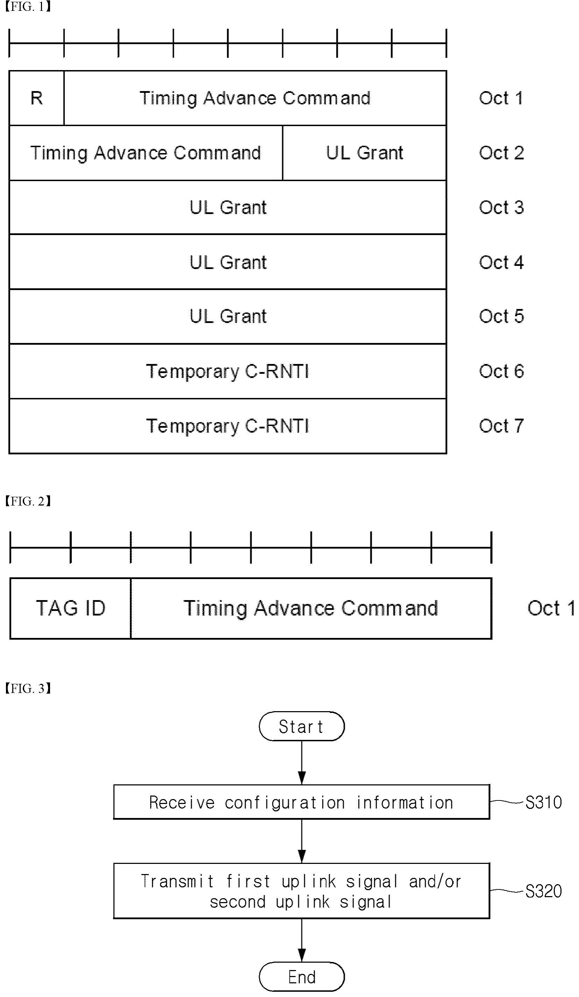

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value (see Table 5 below). The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. Table 4 below shows MAC payload of the MAC RAR.

[Table 4]

6.2.3 MAC payload for Random Access Response

The MAC RAR is of fixed size as depicted in Figure 6.2.3-1, and consists of the following fields:

- R: Reserved bit, set to 0;

- TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;

- Timing Advance Command: The Timing Advance Command field indicates the index value $T_A$ used to control the amount of timing adjustment that the MAC entity has to apply in TS 38.213 [6]. The size of the Timing Advance Command field is 12 bits;

- UL Grant: The Uplink Grant field indicates the resources to be used on the uplink in TS 38.213 [6]. The size of the UL Grant field is 27 bits;

- Temporary C-RNTI: The Temporary C-RNTI field indicates the temporary identity that is used by the MAC entity during Random Access. The size of the Temporary C-RNTI field is 16 bits. The MAC RAR is octet aligned.

Table 5 below shows transmission timing adjustments based on the timing advance command.

[Table 5]

4.2 Transmission timing adjustments

A UE can be provided a value $N_{TA,offset}$ of a timing advance offset for a serving cell by *n-TimingAdvanceOffset* for the serving cell. If for a serving cell the UE is provided two *coresetPoolIndex values 0 and 1 for first and second CORESETs, or is not provided coresetPoolIndex value for first CORESETs and is provided coresetPoolIndex value of 1 for second CORESETs, the UE can be provided first and second $N_{TA,offset}$ values by n-TimingAdvanceOffset* and *n-TimingAdvanceOffset2* for transmissions with TCI states associated with the first and second CORESETs, respectively. A UE can be *provided a second $N_{TA,offset}$* value for transmissions with spatial domain filters corresponding to TCI states associated with *physCellId* different from *physCellId* for the serving cell in addition to a first $N_{TA,offset}$ value for transmissions with spatial domain filters corresponding to TCI states associated with *physCellId* for the serving cell. The *first and second $N_{TA,offset}$* values correspond to first and second TAGs [11, TS 38.321] having an association indicated by *tag-Id-ptr* with first and second joint TCI states provided by *dl-OrJointTCI-StateList* or first and second UL TCI states provided by *ul-TCI-State-List.* If the UE is not provided *n-TimingAdvanceOffset* for a serving cell, the UE determines a default value $N_{TA,offset}$ of the timing advance offset for the serving cell as described in [10, TS 38.133].

If a UE is configured with two UL carriers for a serving cell, a same timing advance offset value $N_{TA,offset}$ applies to both carriers for transmissions on the serving cell that are associated with a same TAG. The UE does not expect to apply two $N_{TA,offset}$ values for transmissions on the SUL carrier.

Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG.

For a band with synchronous contiguous intra-band EN-DC in a band combination with non-applicable maximum transmit timing difference requirements as described in Note 1 of Table 7.5.3-1 of [10, TS 38.133],

if the UE indicates *ul-TimingAlignmentEUTRA-NR* as 'required' and uplink transmission timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell

in MCG in the band. The UE is not expected to transmit a PUSCH/SRS/PUCCH in one CG when the PUSCH/SRS/PUCCH is overlapping in time, even partially, with random access preamble transmitted in another CG.

For a SCS of $2^\mu \cdot 15$ kHz, the timing advance command for a TAG indicates the change of the uplink timing relative to the current uplink timing for the TAG in multiples of $16 \cdot 64 \cdot T_c/2^\mu$. The start timing of the random access preamble is described in [4, TS 38.211].

A timing advance command [11, TS 38.321] in case of random access response or in an absolute timing advance command MAC CE or in a cell switch command, $T_A$, for a TAG indicates $N_{TA}$ values by index values of $T_A$ = 0, 1, 2, ..., 3846, where an amount of the time alignment for the TAG with SCS of $2^\mu \cdot 15$ kHz is $N_{TA} = T_A \cdot 16 \cdot 64/2^\mu$. $N_{TA}$ is defined in [4, TS 38.211] and is relative to the SCS of the first uplink transmission from the UE after the reception of the random access response or absolute timing advance command MAC CE or the cell switch command.

In other cases, a timing advance command [11, TS 38.321], $T_A$, for a TAG indicates adjustment of a current $N_{TA}$ value, $N_{TA\_old}$, to the new $N_{TA}$ value, $N_{TA\_new}$, by index values of $T_A$ = 0, 1, 2,..., 63, where for a SCS of $2^\mu \cdot 15$ kHz, $N_{TA\_new} = N_{TA\_old} + (T_A - 31) \cdot 16 \cdot 64/2^\mu$.

If a UE has multiple active UL BWPs, as described in clause 12, in a same TAG, including UL BWPs in two UL carriers of a serving cell, the timing advance command value is relative to the largest SCS of the multiple active UL BWPs. The applicable $N_{TA\_new}$ value for an UL BWP with lower SCS may be rounded to align with the timing advance granularity for the UL BWP with the lower SCS while satisfying the timing advance accuracy requirements in [10, TS 38.133].

Adjustment of an $N_{TA}$ value by a positive or a negative amount indicates advancing or delaying the uplink transmission timing for the TAG by a corresponding amount, respectively.

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot $n + k + 1 + 2^\mu \cdot K_{offset}$ where k

$$k = \left\lceil N_{slot}^{subframe,\mu} \cdot (N_{T,1} + N_{T,2} + N_{TA,max} + 0.5)/T_{sf} \right\rceil$$, $N_{T,1}$ is a time duration in msec of $N_1$ symbols corresponding to a PDSCH processing time for UE processing capability 1 when additional PDSCH DM-RS is configured, $N_{T,2}$ is a time duration in msec of $N_2$ symbols corresponding to a PUSCH preparation time for UE processing capability 1 [6, TS 38.214], $N_{TA,max}$ is the maximum timing advance value in msec that can be provided by a TA command field of 12 bits, $N_{slot}^{subframe,\mu}$ is the number of slots per subframe, $T_{sf}$ is the subframe duration of 1 msec, and $K_{offset} = K_{cell,offset} - K_{UE,offset}$, where $K_{cell,offset}$ is provided by

---

*cellSpecificKoffset* and $K_{UE,offset}$ is provided by a Differential Koffset MAC CE command [11, TS 38.321]; otherwise, if not respectively provided, $K_{cell,offset} = 0$ or $K_{UE,offset} = 0$. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the UE assumes $N_{1,0} = 14$ [6, TS 38.214]. Slot n and $N_{slot}^{subframe,\mu}$ are determined with respect to the minimum SCS among the SCSs of all configured UL BWPs for all uplink carriers in the TAG. $N_{TA,max}$ is determined with respect to the minimum SCS among the SCSs of all configured UL BWPs for all uplink carriers in the TAG and for all configured initial UL BWPs provided by *initialUplinkBWP*. The uplink slot *n* is the last slot among uplink slot(s) overlapping with the slot(s) of PDSCH reception assuming $T_{TA} = 0$, where the PDSCH provides the timing advance command and $T_{TA}$ is defined in [4, TS 38.211].

If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change.

(continued)

| If the received downlink timing changes and is not compensated or is only partly compensated by the uplink timing adjustment without timing advance command as described in [10, TS 38.133], the UE changes $N_{TA}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates *larger-thanCP-capability.* If a UE indicates *XYZ_capability,* is provided *SRS-autonomousTAupdate* [10, TS 38.133], and transmits SRS based on a configuration by SRS-PosResourceSet in *SRS-PosRRC-InactiveConfig-ValidityArea* in RRC_INACTIVE state, the UE may autonomously update $N_{TA}$ at cell reselection; else, if the UE is not provided *SRS-autonomousTAupdate,* the UE maintains the $N_{TA}$ of a last serving cell prior to the release of a dedicated RRC connection [11, TS 38.321]. For operation with single TAG on a serving cell, if two adjacent slots overlap due to a TA command, the latter slot is reduced in duration relative to the former slot. The UE does not change $N_{TA}$ during an actual transmission time window for a PUSCH or a PUCCH transmission [6, TS 38.214]. If the UE is not provided enableSTx2PofMDCI and operates with two TAGs on a serving cell, the UE does not expect transmissions associated with different TAGs to overlap unless the UE indicates XYZ; if the UE indicates XYZ, the UE reduces in duration a latter transmission using a first TAG to avoid |
|---|
| |
| overlapping with a former transmission using a second TAG. |

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted (see Table 5). The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. Table 6 below shows payload of the timing advance command MAC CE.

[Table 6]

| 6.1.3.4 Timing Advance Command MAC CE<br>The Timing Advance Command MAC CE is identified by MAC subheader with LCID as specified in Table 6.2.1-1.<br>It has a fixed size and consists of a single octet defined as follows (Figure 6.1.3.4-1):<br>- TAG Identity (TAG ID): This field indicates the TAG Identity of the addressed TAG. The TAG containing the SpCell has the TAG Identity 0. The length of the field is 2 bits;<br>- Timing Advance Command: This field indicates the index value $T_A$ (0, 1, 2... 63) used to control the amount of timing adjustment that MAC entity has to apply (as specified in TS 38.213 [6]). The length of the field is 6 bits. |
|---|
| 6.1.3.4a Absolute Timing Advance Command MAC CE<br>The Absolute Timing Advance Command MAC CE is identified by MAC subheader with eLCID as specified in Table 6.2.1-1b.<br>It has a fixed size and consists of two octets defined as follows (Figure 6.1.3.4a-1):<br>- Timing Advance Command: This field indicates the index value TA used to control the amount of timing adjustment that the MAC entity has to apply in TS 38.213 [6]. The size of the field is 12 bits;<br>- TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;<br>- R: Reserved bit, set to 0. |

Timing Advance Group (TAG)

A timing advance group (TAG) refers to a group of serving cells that use the same timing advance value. Table 7 below shows definition of the TAG and configuration information related to the TAG.

【Table 7】

| |
|---|
| **Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.<br><br>*TAG-Config*<br><br>The IE *TAG-Config* is used to configure parameters for a time-alignment group.<br><br>$\qquad$**TAG-Config information element**<br><br>-- ASN1START<br>-- TAG-TAG-CONFIG-START<br><br><br>TAG-Config ::=$\qquad$SEQUENCE {<br>$\quad$tag-ToReleaseList$\qquad$SEQUENCE (SIZE (1..maxNrofTAGs)) OF TAG-Id OPTIONAL,  -- Need N<br>$\quad$tag-ToAddModList$\qquad$SEQUENCE (SIZE (1..maxNrofTAGs)) OF TAG OPTIONAL  -- Need N<br>}<br><br><br>TAG ::=$\qquad$SEQUENCE {<br>$\quad$tag-Id$\qquad$TAG-Id,<br>$\quad$timeAlignmentTimer$\qquad$TimeAlignmentTimer,<br>$\quad$...<br>}<br><br><br>TAG-Id ::=$\qquad$INTEGER (0..maxNrofTAGs-1) |
| ***tag-Id***<br>Indicates the TAG of the SpCell or an SCell, see TS 38.321 [3]. Uniquely identifies the TAG within the scope of a Cell Group (i.e. MCG or SCG). |
| ***timeAlignmentTimer***<br>The timeAlignmentTimer for TAG with ID tag-Id, as specified in TS 38.321 [3]. |
| **maxNrofTAGs**$\quad$INTEGER ::= 4 -- Maximum number of Timing Advance Groups |

– **CellGroupConfig**

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

*CellGroupConfig* **information element**

```
-- ASN1START
-- TAG-CELLGROUPCONFIG-START
-- Configuration of one Cell-Group:
CellGroupConfig ::=            SEQUENCE {
```

```
cellGroupId                 CellGroupId,
    rlc-BearerToAddModList            SEQUENCE (SIZE(1..maxLC-ID)) OF RLC-BearerConfig
OPTIONAL,   -- Need N
    rlc-BearerToReleaseList           SEQUENCE (SIZE(1..maxLC-ID)) OF LogicalChannelIdentity
OPTIONAL,   -- Need N
    mac-CellGroupConfig               MAC-CellGroupConfig                     OPTIONAL,
-- Need M
    physicalCellGroupConfig           PhysicalCellGroupConfig                OPTIONAL,
-- Need M
    spCellConfig                SpCellConfig                       OPTIONAL,   -- Need
M
    sCellToAddModList                 SEQUENCE (SIZE (1..maxNrofSCells)) OF SCellConfig
OPTIONAL,   -- Need N
    sCellToReleaseList                SEQUENCE (SIZE (1..maxNrofSCells)) OF SCellIndex
OPTIONAL,   -- Need N
                                (...)
```

**MAC-CellGroupConfig**

The IE MAC-CellGroupConfig is used to configure MAC parameters for a cell group, including DRX.

*MAC-CellGroupConfig* **information element**

```
-- ASN1START
-- TAG-MAC-CELLGROUPCONFIG-START

MAC-CellGroupConfig ::=           SEQUENCE {
    drx-Config                SetupRelease { DRX-Config }             OPTIONAL,   -- Need M
    schedulingRequestConfig           SchedulingRequestConfig                OPTIONAL, --
Need M
    bsr-Config                BSR-Config                     OPTIONAL,   -- Need M
    tag-Config                TAG-Config                     OPTIONAL,   -- Need M
    phr-Config                SetupRelease { PHR-Config }            OPTIONAL,   -- Need M
    skipUplinkTxDynamic           BOOLEAN,
                                (...)
```

**CellGroupId**

The IE CellGroupId is used to identify a cell group. Value 0 identifies the master cell group. Other values identify secondary cell groups. In this version of the specification only values 0 and 1 are supported.

| *CellGroupId information element* |
|---|
| **-- ASN1START** |

| |
|---|
| -- TAG-CELLGROUPID-START |
| CellGroupId ::=                    INTEGER (0.. maxSecondaryCellGroups) |
| -- TAG-CELLGROUPID-STOP |
| -- ASN1STOP |

| maxSecondaryCellGroups INTEGER ::= 3 |
|---|

Procedure

Uplink time alignment may be performed based on Table 8 below.

[Table 8]

| |
|---|
| 5.2 Maintenance of Uplink Time Alignment
RRC configures the following parameters for the maintenance of UL time alignment:
- *timeAlignmentTimer* (per TAG) which controls how long the MAC entity considers the Serving Cells belonging to the associated TAG to be uplink time aligned;
- *inactivePosSRS-TimeAlignmentTimer* which controls how long the MAC entity considers the Positioning SRS transmission in RRC _INACTIVE in clause 5.26 to be uplink time aligned;
- *cg-SDT-TimeAlignmentTimer* which controls how long the MAC entity considers the uplink transmission for CG-SDT to be uplink time aligned.
The MAC entity shall:
1> when a Timing Advance Command MAC CE is received, and if an $N_{TA}$ (as defined in TS 38.211 [8]) has been maintained with the indicated TAG:
2> apply the Timing Advance Command for the indicated TAG;
2> if there is ongoing Positioning SRS Transmission in RRC_INACTIVE as in clause 5.26:
3> start or restart the *inactivePosSRS-TimeAlignmentTimer* associated with the indicated TAG.
2> if CG-SDT procedure triggered as in clause 5.27 is ongoing:
3> start or restart the *cg-SDT-TimeAlignmentTimer* associated with the indicated TAG.
2> else:
3> start or restart the *timeAlignmentTimer* associated with the indicated TAG.
1> when a Timing Advance Command is received in a Random Access Response message for a
Serving Cell belonging to a TAG or in a MSGB for an SpCell:
2> if the Random Access Preamble was not selected by the MAC entity among the contention-based Random Access Preamble:
3> apply the Timing Advance Command for this TAG;
3> start or restart the *timeAlignmentTimer* associated with this TAG.
2> else if the *timeAlignmentTimer* associated with this TAG is not running:
3> apply the Timing Advance Command for this TAG;
3> start the *timeAlignmentTimer* associated with this TAG;
3> when the Contention Resolution is considered not successful as described in clause 5.1.5; or
3> when the Contention Resolution is considered successful for SI request as described in clause 5.1.5, after transmitting HARQ feedback for MAC PDU including UE Contention Resolution Identity MAC CE:
4> stop *timeAlignmentTimer* associated with this TAG.
3> when the Contention Resolution is considered not successful as described in clause 5.1.5:
4> if CG-SDT procedure triggered as in clause 5.27 is ongoing:
5> set the $N_{TA}$ value to the value before applying the received Timing Advance Command as in TS 38.211 [8].
3> when the Contention Resolution is considered successful for Random Access procedure while the CG-SDT procedure is ongoing:
4> stop *timeAlignmentTimer* associated with this TAG; |

(continued)

| |
|---|
| 4> start or restart the *cg-SDT-TimeAlignmentTimer* associated with this TAG. |
| |
| 3> when the Contention Resolution is considered successful for Random Access procedure while SRS transmission in RRC _INACTIVE is ongoing:<br>4> start or restart the *inactivePosSRS-TimeAlignmentTimer* associated with this TAG.<br>2> else:<br>3> ignore the received Timing Advance Command.<br>1> when an Absolute Timing Advance Command is received in response to a MSGA transmission including C-RNTI MAC CE as specified in clause 5.1.4a:<br>2> apply the Timing Advance Command for PTAG;<br>2> if there is ongoing Positioning SRS Transmission in RRC _INACTIVE as in clause 5.26:<br>3> start or restart the *inactivePosSRS-TimeAlignmentTimer* associated with the indicated TAG.<br>2> if CG-SDT procedure is ongoing:<br>3> start or restart the *cg-SDT-TimeAlignmentTimer* associated with PTAG.<br>2> else:<br>3> start or restart the *timeAlignmentTimer* associated with PTAG.<br>1> when the indication is received from upper layer for stopping the *inactivePosSRS-TimeAlignmentTimer:*<br>2> stop the *inactivePosSRS-TimeAlignmentTimer.*<br>1> when the indication is received from upper layer for starting the *inactivePosSRS-TimeAlignmentTimer:*<br>2> start or restart the *inactivePosSRS-TimeAlignmentTimer.*<br>1> when instruction from the upper layer has been received for starting the *cg-SDT-TimeAlignmentTimer:*<br>2> start the *cg-SDT-TimeAlignmentTimer.*<br>1> when instruction from the upper layer has been received for stopping the *cg-SDT-TimeAlignmentTimer:*<br>2> consider the *cg-SDT-TimeAlignmentTimer* as expired.<br>1> when instruction from the upper layer has been received for starting the *TimeAlignmentTimer* associated with PTAG:<br>2> start the *TimeAlignmentTimer* associated with PTAG.<br>1> when a *timeAlignmentTimer* expires:<br>2> if the *timeAlignmentTimer* is associated with the PTAG:<br>3> flush all HARQ buffers for all Serving Cells;<br>3> notify RRC to release PUCCH for all Serving Cells, if configured:<br>3> notify RRC to release SRS for all Serving Cells, if configured;<br>3> clear any configured downlink assignments and configured uplink grants;<br>3> clear any PUSCH resource for semi-persistent CSI reporting;<br>3> consider all running *timeAlignmentTimers* as expired;<br>3> maintain $N_{TA}$ (defined in TS 38.211 [8]) of all TAGs. |

| |
|---|
| 2> else if the *timeAlignmentTimer* is associated with an STAG, then for all Serving Cells belonging to this TAG:<br>3> flush all HARQ buffers;<br>3> notify RRC to release PUCCH, if configured;<br>3> notify RRC to release SRS, if configured;<br>3> clear any configured downlink assignments and configured uplink grants; |
| |
| 3> clear any PUSCH resource for semi-persistent CSI reporting;<br>3> maintain $N_{TA}$ (defined in TS 38.211 [8]) of this TAG.<br>1> when the *inactivePosSRS-TimeAlignmentTimer* expires: |

(continued)

> 2> notify RRC to release Positioning SRS for RRC _INACTIVE configuration(s).
>
> 1> when the *cg-SDT-TimeAlignmentTimer* expires:
>
> 2> clear any configured uplink grants;
>
> 2> if a PDCCH addressed to the MAC entity's C-RNTI after initial transmission for the CG-SDT with CCCH message has not been received:
>
> 3> consider ongoing CG-SDT procedure as terminated;
>
> 3> indicate the expiry of *cg-SDT- TimeAlignmentTimer* to the upper layer.
>
> 2> flush all HARQ buffers;
>
> 2> maintain $N_{TA}$ (defined in TS 38.211 [8]) of this TAG.
>
> When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the *timeAlignmentTimer* associated with the SCell as expired.
>
> The MAC entity shall not perform any uplink transmission on a Serving Cell except the Random Access Preamble and MSGA transmission when the *timeAlignmentTimer* associated with the TAG to which this Serving Cell belongs is not running, CG-SDT procedure is not ongoing or SRS transmission in RRC _INACTIVE as in clause 5.26 is not on-going.
>
> Furthermore, when the *timeAlignmentTimer* associated with the PTAG is not running, CG-SDT procedure is not ongoing and SRS transmission in RRC _INACTIVE as in clause 5.26 is not ongoing, the MAC entity shall not perform any uplink transmission on any Serving Cell except the Random Access Preamble and MSGA transmission on the SpCell.
>
> The MAC entity shall not perform any uplink transmission except the Random Access Preamble and MSGA transmission when the *cg-SDT-TimeAlignmentTimer* is not running during the ongoing CG-SDT procedure as triggered in clause 5.27. The MAC entity shall not perform any uplink transmission except the Random Access Preamble and MSGA transmission when *inactivePosSRS-TimeAlignmentTimer* is not running during the procedure for SRS transmission in RRC _INACTIVE as in clause 5.26.

The contents described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

According to 3GPP standards up to NR Rel-17, timing advance (TA) setting for UE uplink transmission of the base station to compensate for the propagation delay between the base station and the UE may be performed through higher layer signaling. Further, a TA for a specific group of cell(s) may be set/managed separately through a concept/definition of a timing advance group (TAG).

Up to now, a method of supporting multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CC/BWP.

In this case, it is necessary to discuss how the base station configures/indicates the plurality of $T_A$ values to the UE or/and how a connection relationship between the plurality of TA values and UE UL channel/RS is performed. As described in Rel-18 MIMO WID objective (RP-213598) of Table 9 below, the configuration of TA values for multi-DCI (M-DCI) based M-TRP operation is considered.

[Table 9]

| 5. Study, and if justified, specify the following |
| --- |
| - Two TAs for UL multi-DCI for multi-TRP operation |
| - Power control for UL single DCI for multi-TRP operation where unified TCI framework extension in objective 2 is assumed. |
| For the case of simultaneous UL transmission from multiple panels, the operation will only be limited to the objective 6 scenarios. |

Here, the TA (TA value) may be based on the description of FIG. 2 and the contents described in the timing advance (TA) related procedure described above.

In RAN1 and RAN2 standards prior to Rel-18, the base station manages UE TA values through values called $N_{TA}$ and $N_{TA,offset}$. The base station may set $N_{TA}$ as follows. The base station may i) set $N_{TA}$ via RAR MAC CE or ii) set $N_{TA}$ via timing advance command MAC CE (TA command MAC CE). In addition, the base station may utilize the concept of the Timing Advance Group (TAG) to configure up to 4 TAGs per UE for a specific cell or cell combination and perform update/management of an $N_{TA}$ value for each TAG.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

In Rel-18 MIMO, an agreement is reached regarding two TAs, as shown in Table 10 below.

[Table 10]

| Agreement |
| --- |
| For multi-DCI based multi-TRP operation with two TAs, support configuring two TAGs belonging to a serving cell. |
| **Agreement** |
| For multi-DCI multi-TRP operation with two TAs in a CC, two DL reference timings are supported where each DL reference timing is associated with one TAG<br>• baseline assumption is that the Rx timing difference between the two DL reference timings is no larger than CP length<br>• as an optional UE capability, Rx timing difference between the two DL reference timings can be assumed to be larger than CP length<br>o FFS: the maximum Rx timing difference (could be up to RAN4)<br>o Other than UE capability details and relevant configuration, no additional RAN1 specification enhancement specific for this case is expected |

As described above, it is discussed that two TAGs may be configured to manage two TA values in one serving cell, and it is also agreed that a reference timing to apply the TA value managed in each TAG would support two DL reference timings in one serving cell.

A method of handling an overlapping part between two UL transmissions associated with two TAs is discussed. With respect to handling the overlapping part, methods of introducing a scheduling restriction and/or dropping rule, etc. are discussed. In an M-DCI based M-TRP situation, assuming non-ideal backhaul between TRPs, it is also concluded that two TRPs cannot always know an overlapping region of two UL transmissions. This means that the UL scheduling of one of the two TRPs cannot be dynamically coordinated by considering the UL scheduling of the other TRP.

The above conclusion shows that a dynamic-level scheduling restriction is not realistically possible. In other words, the above conclusion shows that a semi-static scheduling restriction or a dropping rule can be utilized to handle the overlapping part/overlapping region described above. However, the handling of the overlapping region may not be smoothly performed with one solution.

For example, a collision handling method may vary depending on the collision combination of different channels/RSs related to different TAs. For example, there may be a combination where it is advantageous to apply the scheduling restriction and a combination where it is advantageous to apply the dropping (or/and muting).

In addition, for the dropping (or/and muting), a new priority rule may need to be redefined based on the collision combination, not the basic priority rule.

In the present disclosure, the term 'collision combination' may mean a combination of colliding/overlapping channels/RSs.

Based on the above-described background, the present disclosure proposes a method of transmitting uplink of a UE when a base station supports multiple TAs in a specific CC/BWP(s) of the UE.

Specifically, the following describes i) a method of differently applying a scheduling restriction and a dropping rule based on a collision combination of different channels/RSs related to different TAs (proposal 1), ii) a method of applying a dropping rule to an overlapping region (proposal 2), iii) a method of redefining a priority rule when performing drop/mute/rate-matching for an overlapping region based on a collision combination of different channels/RSs related to different TAs (proposal 3), iv) a method for a UE to report TA values (related to two TAGs/TAs) (proposal 4), and v) an additional embodiment for performing (partial) drop/mute/rate-matching based on a collision combination of different channels/RSs related to different TAs (proposal 5).

In the present disclosure, '/' can be interpreted as 'and', 'or', or 'and/or' based on the context.

In the following, a priority rule and/or omission rule in a collision between the same/different channels/RSs of existing (legacy) NR may mean a priority transmission order rule based on a combination of collision channels/RSs or/and a configured time domain behavior (e.g., resourceType) in NR up to Rel-17.

In the following, a collision of UL channels/RSs may mean that all or some of time (frequency) domain resources between different UL channels/RSs overlap.

Proposal 1

A method of differently applying a scheduling restriction and a dropping rule is described below.

Specifically, a scheduling restriction and a dropping rule may be differently applied based on a collision combination of different channels/RSs related to different TAs.

Proposal 1-1

i) The scheduling restriction may be applied to a collision between UL resources by semi-static scheduling of RRC (or/and MAC)-level and ii) a collision between resources by semi-static scheduling and UL resources by dynamic scheduling.

Dropping/muting/rate-matching may be applied to the collision between the UL resources by the dynamic scheduling.

For example, for a collision between the UL resources due to the semi-static scheduling, it may be configured/indicated to empty preceding n symbol(s) or subsequent n symbol(s) in a time domain region of a specific resource (or/and a slot related to the corresponding resource) among different resources related to different TAs. The above configuration may be applied as a restriction in scheduling of the base station. That is, the base station may transmit scheduling related information considering the n symbol(s) to the UE. Separately from the scheduling, the base station may transmit a configuration/indication related to the n symbols(s) to the UE.

The present embodiment takes into account the following technical matters. Even between TRPs connected via non-ideal backhaul, a coordination of RRC (or/and MAC) level (semi-static level) may be possible. The operation based on the proposal 1 that takes this into account is to secure a guard period. An overlapping region between different resources related to different TAs can be prevented in advance by securing the guard period.

Additionally, the following embodiment may be applied to a collision between a resource (semi-static resource) by semi-static scheduling and a resource (dynamic resource) by dynamic scheduling. A time domain region of the semi-static resource can be entirely preserved. A scheduling restriction by the base station may be applied/performed for the remaining resource (i.e., dynamic resource) so as not to invade the time domain region of the corresponding semi-static resource. The present embodiment takes into consideration the following technical matters. As described above, a coordination between TRPs at the RRC (or/and MAC)-level (semi-static level) can be possible. The above embodiment is to prevent an overlapping region by transferring information on the semi-static scheduling of a specific TRP to another TRP.

A (partial-)drop/mute/rate-matching operations may be performed for a collision between UL resources by dynamic scheduling. This is described in detail below.

For example, the existing defined priority rule may be applied. When the same/different channels/RSs collide, the UE may perform the (partial-)drop/mute/rate-matching operations on resources with a lower priority (e.g., higher priority value) based on the priority rule.

For example, the (partial-)drop/mute/rate-matching operations may be performed based on a dropping rule (e.g., a dropping rule based on embodiments of proposal 2 described below). The dropping rule may be applied assuming that dynamic-level coordination between TRPs is impossible. The base station (each TRP) may perform a blind detection on the UL transmission of the UE based on drop/puncture/rate-matching results.

In the above example, the UL resource by the semi-static scheduling may be at least one of a configured-grant PUSCH, periodic CSI reporting (via PUCCH), semi-persistent CSI reporting (via PUCCH/PUSCH), a periodic SRS, an (activated) semi-persistent SRS.

In the above example, the UL resource by the dynamic scheduling may be at least one of UL resource scheduled by DCI (CFRA-based PRACH, PUCCH, PUSCH, SRS), UE-triggered UL transmission (e.g., CBRA-based PRACH, SR PUCCH).

In the above, 'the UE may be configured/indicated to empty n symbols' and 'the base station scheduling restriction may be performed' may mean 'the UE does not expect uplink resources to be allocated in the corresponding region.'

As an additional embodiment of the proposal 1, an indicator indicating whether multi-TRP is configured as an ideal backhaul may be used. This is described in detail below.

Even in the same M-DCI based M-TRP environment, there may be an indicator that informs the UE whether a multi-TRP is configured as an ideal backhaul or a non-ideal backhaul. In other words, based on the indicator, the backhaul related to the multi-TRP may be determined/indicated as the ideal backhaul or the non-ideal backhaul. The base station may transmit information including the indicator to the UE based on RRC, MAC and/or DCI.

i) If it is the ideal backhaul (by the scheduling restriction/coordination of the multi-TRP), the UE may expect that no collision will occur between different channels/RSs related to different TAs.

ii) If it is the non-ideal backhaul, UL transmission may be performed by applying the dropping rule (as in the proposal 2) when different channels/RSs related to different TAs collide.

Or/and, an indicator (related to the different TA) may be introduced about whether to perform the operation of the i) or the operation of the ii). That is, the above-described indicator may represent an ideal backhaul (an operation related to an ideal backhaul) or a non-ideal backhaul (an operation related to a non-ideal backhaul).

Additionally, similar to the scheduling restriction of the proposal 1, the base station may configure the guard period of n symbol(s) based on a SubCarrier Spacing (SCS) configuration $\mu$ of the UE (see Table 11 below). For example, the guard period may be configured between UL channels/RSs related to different TA values. For example, the guard period may be configured between different (contiguous) slots in which UL channels/RSs related to different TA values are transmitted.

In the colliding UL channels/RS (or/and contiguous slots), the UL channels/RSs (or/and slots) in which the guard period is configured may be configured/indicated.

Specifically, the base station may configure/indicate to the UE whether to configure the guard period to the UL channel/RS (or/and slot) located ahead on a time domain or to the UL channel/RS (or/and slot) located behind on the time domain.

The number of n symbol(s) may be less than or equal to the "Maximum number of overlapped OFDM symbols" in Table 11 below. For example, in a UE transmitting at 15 kHz SCS ($\mu$=0), an n-symbol guard period of 5 symbols or less may be configured/indicated for the preceding or subsequent UL channels/RSs (or/and slots).

If the UL channel located ahead on the time domain is referred to as a first UL channel, and the UL channel located behind on the time domain is referred to as a second UL channel, the guard period may be configured as follows. For example, the guard period may be configured behind the first UL channel (a resource related to the first UL channel). For example, the guard period may be configured in front of the second UL channel (a resource related to the second UL channel).

In the proposal 1, the scheduling restriction may be replaced with the guard period.

[Table 11]

| $\mu$ | FR1 | FR2 | Maximum number of overlapped OFDM symbols |
|---|---|---|---|
| 0 | 34.6 | | 5 |
| 1 | 34.6 | | 10 |
| 2 | 34.6 | 8.5 | 20 for FR1; 4 for FR2 |
| 3 | | 8.5 | 8 |

Even if the dropping rule is supported for an overlapping region between two UL transmissions associated with two TAs, a specific discussion is required regarding a method related to the corresponding dropping. For example, the dropping may be performed based on at least one of the following a) to c).

a) Perform the dropping only on symbol(s) corresponding to the overlapped region for UL resources with a lower priority (symbol-level partial dropping)
b) Perform the dropping on the UL resource itself with a lower priority
c) Perform the partial dropping and perform transmission by performing rate-matching, etc. using the remaining symbol(s).

It is necessary to determine, based on which of the above-described methods a) to c), that the dropping should be performed. For example, if the symbol-level partial dropping is performed, a problem may occur in the UL transmission (e.g., short PUCCH, etc.) including 1 symbol or 2 symbols. For example, a problem may occur in which the UL transmission performance may be degraded because the symbol dropped by symbol-level partial dropping includes DM-RS.

The following proposals 2 and 3 propose embodiments for solving the above-described problems.

Proposal 2

Method of applying a dropping rule to a collision of different channels/RSs related to different TAs

Proposal 2-1

A method of supporting a symbol-level partial dropping for an overlapping region may be considered.

In a collision of different channels/RSs related to different TAs, a UE may drop an UL resource with a lower priority, but may perform drop/mute operation only for colliding symbol(s). That is, the UE may perform transmission for non-colliding symbol(s) in the UL resource with the lower priority.

The priority may be based on the existing defined priority rule (the priority rule applied when the same/different channels/RSs collide).

For example, when a collision occurs between an SRS and another UL channel/RS with higher priority, the drop/mute operation may be performed only for the colliding symbol(s) of the corresponding SRS (in the same manner as the existing SRS partial dropping).

For another example, when a collision occurs between a PUSCH and another UL channel/RS with higher priority, the drop/mute operation may be performed only for colliding symbol(s) of the corresponding PUSCH. In this instance, rate-matching may be performed (as in PUSCH repetition type-B) so that transmission can be performed using only non-colliding symbol(s) of the corresponding PUSCH.

For another example, when a collision occurs between a (short) PUCCH and another UL channel/RS with higher priority, the drop/mute operation may be performed only for colliding symbol(s) of the PUCCH. The UE may perform transmission for non-colliding symbol(s) as it is (in the same manner as the SRS partial dropping).

In addition, when a collision occurs between a (long) PUCCH and another UL channel/RS with higher priority, the drop/mute operation may be performed only for colliding symbol(s) of the PUCCH. The UE may perform UCI transmission using non-colliding symbol(s).

In this instance, if time/frequency domain resources for UCI configuration are insufficient due to partial symbol drop, the UE may drop the PUCCH transmission itself.

Or/and, even if the time/frequency domain resources for UCI configuration are insufficient due to the partial symbol drop, the UE may perform the drop/omission on low priority contents and may configure UCI with high priority contents (e.g., HARQ A/N/SR > CSI) to perform PUCCH transmission. In this case, among the CSI contents, low priority contents (e.g., Part 2 CSI) may be dropped/omitted based on the existing CSI omission rule, and the remaining contents may be configured as UCI to perform PUCCH transmission.

According to the operation of the proposal 2-1, the UE may transmit all two channels/RSs even if different channels/RSs related to different TAs collide. Therefore, UL resource waste and UL performance degradation can be prevented. The base station may have to perform the blind detection on partial dropping of lower priority among the colliding channels/RSs.

Proposal 2-2

A method of dropping channel/RS itself with lower priority as well as an overlapping region may be considered.

In a collision of different channels/RSs related to different TAs, the UE may drop/mute an UL resource with lower priority. The present embodiment considers the following technical matters.

There may be a case where a fatal adverse effect is caused to transmission due to symbol-level partial drop (e.g., a situation where a PUCCH consisting of 1 or 2 symbols is dropped or a situation where a PUSCH/PUCCH DM-RS is dropped, etc.). According to the present embodiment to prevent the above-described situation, the transmission of the channel/RS with lower priority itself is not performed. A base station may have to perform a blind detection on dropping of the lower priority among the colliding channels/RSs.

As an additional embodiment of the proposal 2, an indicator indicating whether a multi-TRP is configured as an ideal backhaul may be used. This is described in detail below.

Even in the same M-DCI based M-TRP environment, there may be an indicator that informs the UE whether a multi-TRP is configured as an ideal backhaul or a non-ideal backhaul. In other words, based on the indicator, the backhaul related to the multi-TRP may be determined/indicated as the ideal backhaul or the non-ideal backhaul. The base station may transmit information including the indicator to the UE based on RRC, MAC and/or DCI.

i) If it is the ideal backhaul, piggy back or/and UCI multiplexing operations may be performed in collision combinations of PUSCH+PUSCH/PUSCH+PUCCH/PUCCH+PUCCH.

ii) If it is the non-ideal backhaul, UL transmission may be performed by applying the dropping rule (as in the proposal 2) when different channels/RSs related to different TAs collide.

Or/and, an indicator (related to the different TA) may be introduced about whether to perform the operation of the i) or the operation of the ii). That is, the above-described indicator may represent an ideal backhaul (an operation related to an ideal backhaul) or a non-ideal backhaul (an operation related to a non-ideal backhaul).

Embodiment(s) based on a combination of the proposals 2-1 and 2-2 can be applied to operations of the UE/base station. For example, the operation of the proposal 2-1 may be performed for the SRS and the PUSCH where the symbol-level partial drop can be smoothly performed, and the operation of the proposal 2-2 may be performed for the (short) PUCCH where a significant performance problem may occur when performing the symbol-level partial drop.

Proposal 3

A method of redefining a priority rule when performing drop/mute/rate-matching is described below.

Specifically, when (partial) drop/mute/rate-matching is performed based on a collision combination of different channels/RSs related to different TAs, newly defined/redefined priority rule may be used.

Proposal 3-1

In a collision of different channels/RSs related to different TAs, a different rule from the existing priority rule (priority rule when the same/different channels/RSs of the legacy NR collide) can be applied.

(Considering the degradation of transmission performance when symbol-level partial dropping is performed) Even if it violates a priority rule based on a time domain behavior, 1 or 2 symbol short PUCCHs may be unconditionally prioritized (i.e., colliding symbol(s) of other UL channels/RSs may be dropped). For example, when a periodic short PUCCH and an aperiodic long PUCCH collide, a short PUCCH may be prioritized.

In other words, according to the priority rule based on the time domain behavior, aperiodic transmission (aperiodic long PUCCH transmission) should be prioritized, but according to the present embodiment, transmission that may cause performance degradation when symbol-level partial dropping is applied is prioritized. When the symbol-level partial dropping is applied, the periodic short PUCCH, which may cause the performance degradation, is transmitted, and overlapping symbol(s) among the symbols of the aperiodic long PUCCH are dropped.

Additionally, if PUSCH/PUCCH DM-RS is located in a symbol that may be dropped by the symbol-level partial dropping, the PUSCH/PUCCH DM-RS may be prioritized. The PUCCH/PUCCH may be transmitted as scheduled, and the colliding symbol(s) of other colliding UL channels/RSs may be dropped.

Alternatively, in an M-DCI based M-TRP environment, a configuration/indication/regulation may be performed by the base station to prioritize a UL channel/RS associated/corresponding to a specific CORESET pool(/TAG/TRP) index. For example, a UL channel/RS related to CORESET pool index 0 may be regulated/defined to have a high priority.

Proposal 3-2

When different RACHs related to different TAs collide, the following embodiments may be considered.

According to an embodiment, RACH associated/corresponding to a specific CORESET pool(/TAG/TRP) index may be prioritized. The UE may drop RACH with low priority.

According to an embodiment, the UE may prioritize RACH triggered by preceding DCI among DCIs that perform RACH transmission ordering by contention-free random access (CFRA). The UE may transmit the RACH triggered by the preceding DCI and drop the RACH triggered later.

According to an embodiment, the UE may prioritize an (earliest transmitted) RACH corresponding to a preceding RACH occasion and/or a lowest RACH preamble/resource index/mask index/(configured/indicated) SSB index. The UE may transmit the RACH based on the preceding RACH occasion and/or the lowest RACH preamble/resource index/mask index/(configured/indicated) SSB index and drop the remaining RACHs. The present embodiment takes into consideration the following technical matters. Even if RACH occasions of different RACHs are different from each other, (partially) overlap may occur in the time domain due to different TAs and different DL reference timing. The above-described embodiment may be applied to resolve the ambiguity that occurs in such a case.

In addition, when a RACH related to a specific TA collides with a UL channel/RS related to another TA, the UE may unconditionally prioritize RACH transmission and (partially) drop other UL channels/RSs. This is to protect the RACH with high priority when the RACH and other UL channels/RSs collide due to different TA values.

The following method may be considered as an additional embodiment of the proposal 3. In URLLC PUCCH (UCI) transmission scheduling, the base station may configure/indicate to the UE whether the UCI corresponds to a high priority or a low priority. If this tag corresponds to the high priority, a scheduling restriction may be applied semi-statically, or the dropping rule of the proposal 1/2/3 may also operate to have the high priority.

In the above, in the collision of different channels/RSs related to different TAs, the number of symbols in the overlapping region may be one symbol or multiple symbols based on the SCS.

Proposal 4

A method for a UE to report a TA value (related to two TAGs/TAs) is described below.

Proposal 4-1

When two TAGs/TAs are configured for a specific serving cell, the UE may report value(s) related to corresponding two TA values to the base station.

The value(s) related to the two TA values may include i) and/or ii) below.

i) Values of TA value #1 and TA value #2 themselves related to the two TAGs (e.g., NTA values related to the two TAGs)
ii) A difference value between the TA value #1 and the TA value #2 (e.g., a difference value between the NTA values related to two TAGs and/or a TA value for a relative TA command of TAC MAC CE)

The TA value for the relative TA command of the TAC MAC CE may mean $T_A$ in $N_{TA\_new} = N_{TA\_old} + (T_A - 31) \cdot 16 \cdot 64/2^{\mu}$ based on Table 5 described above.

When the above difference value is reported, the following granularity/step size may be used to reduce a reporting payload. Specifically, the difference value may be reported based on a step size (or granularity) corresponding to a natural number greater than 1, not a granularity of 1 unit.

Based on that the value (difference value) related to the two TA values being greater than or equal to/greater than (or less than or equal to/less than) a specific value, the base station may determine whether different UL transmissions related to different TAs will collide in the time domain.

Hereinafter, specific examples are described of cases where the operations based on the above-described proposals 1 to 3 are not performed/are performed based on the reported TA value.

When TA value #1 > TA value #2, if the UE first transmits a UL signal (in the time domain) with TRP #1 and then transmits a UL signal with TRP #2, the base station may know that there will be no overlapping between the two UL signals. Therefore, the scheduling restriction and/or the dropping rule (of the proposals 1 to 3) may not be applied.

When TA value #2 > TA value #1, if the UE first transmits a UL signal (in the time domain) with TRP #2 and then transmits a UL signal with TRP #1, there is a possibility of occurrence of (symbol-level) overlapping between two UL signals. Therefore, the scheduling restriction and/or the dropping rule (of the proposals 1 to 3) may be applied.

Additionally, the UE may report information on how many symbols will be overlapped when different UL transmissions related to different TAs overlap in addition to the report on the values related to the two TA values.

Alternatively, since the values related to the two TA values reported by the UE are TA values used in actual transmission in the physical layer of the UE, the base station may apply this value as a reference value for the two TA differences of the UE or/and a reference value for calculating the number of overlapped symbols.

The report on the values related to the two TA values may be on/off by the configuration/indication of the base station. The base station may transmit information (e.g., on or off) indicating whether to perform the report on the values related to the two TA values to the UE based on upper layer signaling (e.g., RRC/MAC CE).

Based on whether the report on the values related to the two TA values is i) the On or ii) the Off, the UE may recognize whether an M-TRP environment is i) a non-ideal backhaul environment or ii) an ideal backhaul environment. That is, information representing the on/off of the report may be used as an indicator for non-ideal backhaul/ideal backhaul configuration.

In the M-TRP situation, if two TRPs are connected via the ideal backhaul (since an entity indicating the two TA values is a network), the two TRPs may know the two TA values in real time through dynamic-level coordination between TRPs without the report of the UE.

If the two TRPs are connected via the non-ideal backhaul, the two TRPs cannot know in real time the TA values related to each TRP(/TAG). The base station may configure, to the UE, a report on the values related to the two TA values. Based on the report of the UE, the base station may determine whether the UL transmission related to each TRP(/TAG) will collide with the UL transmission related to another TRP(/TAG).

Or/and, the UE may perform the above-described report if the difference between the TA value #1 and the TA value #2 is greater than or equal to a specific value (or less than or equal to a specific value) (as stipulated/defined/configured/indicated by the base station).

The above-described operation may be applied to both an intra-cell M-DCI based M-TRP environment and an inter-cell M-DCI based M-TRP environment. That is, the values related to the two TA values may include a TA value for a neighbor cell (related to an additional PCI configured to the UE).

Additional embodiment of proposal 4

In relation to TA management enhancement based on Rel-18 mobility enhancement (mobility related beam/TA enhancement based on L1/L2-triggered mobility; lower layer), the following operations may be performed.
The UE may report TA value(s) for candidate (serving) cell(s) using the methods of the proposal 4.
For example, TA value(s) for candidate (serving) cell(s) may be directly reported, or/and difference value(s) between the TA value(s) for the candidate (serving) cell(s) and a TA value related to a current serving cell may be reported.
In addition, the report may be on/off by configuration/indication of the base station or may be triggered by the UE when the difference value between the TA value(s) for the candidate (serving) cell(s) and the TA value related to the current serving cell is a specific value or more or a specific value or less.
The report related to the TA value of the proposal 4 may be performed based on an MAC CE message. For example, the UE may transmit an MAC CE including value(s) related to the two TA values to the base station. Or/and, the report related to the TA value may be performed by PUCCH transmission by the configuration/indication of the base station. For example, the UE may transmit the PUCCH to the base station, and UCI related to the PUCCH may include value(s) related to the two TA values.

Proposal 5

Additional embodiments for a dropping rule of an overlapping region are described below.
Specifically, the following describes additional embodiments that can be applied when performing (partial) drop/mute/rate-matching based on collision combinations of different channels/RSs related to different TAs.

Proposal 5-1

When there is a collision (in the time domain) of different channels/RSs related to different TAs, the UE may operate as follows.
For example, a channel/RS with an earlier start time in the time domain may have a higher priority than other channels/RSs. The UE may prioritize and transmit the channel/RS with an earlier start time in the time domain. For example, a channel/RS with an earlier scheduling/configuring/indicating time may have a higher priority than other channels/RSs. The UE may prioritize and transmit the channel/RS with an earlier scheduling/configuring/indicating time. For example, a (partial) drop operation for a channel/RS with a low priority may be performed based on the proposals 1 to 3 described above.
The present embodiment takes into consideration the following technical matters. When it is known that an earlier signal and a later signal overlap each other, a processing time required for UL cancellation shall be secured in order to drop the earlier signal. However, it may be difficult to secure the processing time for the channel that is faster in terms of time.
According to an additional embodiment, if a minimum UL cancellation processing time for a UL channel/RS with a lower priority is not guaranteed, the UE may exceptionally prioritize and transmit the UL channel/RS with the low priority and drop the UL channel/RS with the high priority.
Specifically, the UE basically transmits only signals with a high priority (e.g., lowest TRP/CORESET/TAG index, depending on legacy NR priority rule and/or omission rule) and (partially) drops signals with a low priority. If a minimum UL cancellation processing time for a (temporally earlier) low priority channel is not guaranteed, the UE may exceptionally (partially) drop a (temporally later) high priority channel and transmit the low priority channel. In this case, the (partial) drop operation may be based on the operations of the proposals 1 to 3.

Proposal 5-2

When there is a collision (in the time domain) of different channels/RSs related to different TAs, the UE may transmit the two signals without dropping based on an overlapping region.
Specifically, based on only CP durations within a last symbol of a temporally earlier signal and a first symbol of a temporally later signal overlapping each other, the UE may (exceptionally) transmit the two signals without dropping.
For example, in the collision, all symbols of the earlier signal (e.g., the first signal) are transmitted completely. That is, the first signal is transmitted based on configured/indicated/scheduled symbols. In the later signal (e.g., the second signal), only an overlapping cyclic prefix (CP) part (with the earlier signal) within the first symbol is transmitted, and the remaining part is transmitted. That is, the second signal is transmitted based on the symbols excluding the CP part overlapping with the first signal among the configured/indicated/scheduled symbols.

For example, if a threshold of a specific time domain is regulated/defined/set, and an overlap is less than or equal to a threshold in the CP part within the first symbol of the later signal, the UE may transmit the two signals without dropping. If the overlap is greater than the threshold (in the time domain), the UE may completely transmit only one of the two signals and (partially) drop the other.

The dropping operation of the proposal 5-2 may be based on the operations of the proposals 1 to 3. According to the proposal 5-2, the following effect is derived. Since the overlapping region is within the CP (within the threshold) even if two signals related to different TAs collide, the UE may transmit all the two signals. Therefore, the resource utilization can be improved compared to the case of (partially) dropping.

Proposal 5-3

When there is a collision (in the time domain) of different channels/RSs related to different TAs, a UE capable of STxMP (Simultaneous Transmission across Multiple Panels) may operate as follows.

Based on a total transmission power in an overlapped region (i.e., a sum of transmission powers for two UL channels/RSs), the UE may either i) drop the UL channel/RS (with lower priority) or ii) transmit the two UL channels/RSs without dropping. This is described in detail below.

If the sum of the transmission powers of the two signals in the overlapped region is less than or equal to the max power (e.g., Pcmax) of the UE, the UE may transmit all the two signals without dropping.

If the sum of the transmission powers exceeds the max power of the UE, the UE may transmit only one signal (with high priority) of the two signals and drop the other. Or/and, the UE may perform the dropping only on symbols corresponding to the overlapped region of the signal with lower priority.

For another example, in the collision, if the sum of the transmission powers of the two signals in the overlapped region is less than or equal to the max power (e.g., Pcmax) of the UE, the UE may transmit all the two signals based on the configured/indicated power. If the sum of the transmission powers exceeds the max power of the UE, the UE may i) transmit the signal with high priority based on the configured/indicated transmission power and ii) transmit the other signal with low priority based on the transmission power to which power scaling is applied. The power scaling is performed so that the sum of the transmission powers does not exceed the max power of the UE. In other words, the sum of the transmission power of the signal with high priority and the scaled transmission power of the other signal with low priority does not exceed the max power of the UE.

Or/and, the UE may perform power scaling only on symbols corresponding to an overlapped region of the low priority signal and transmit it. In other words, the low priority signal is transmitted based on the scaled transmission power only in the overlapped region.

According to the proposal 5-3, the following effect is derived. When two signals related to different TAs collide, the UE transmits the two signals without dropping if the sum of the transmission powers of the two signals in the overlapped region does not exceed the max power of the UE. Therefore, collision handling can be performed by maximally utilizing a capability of the UE supporting the STxMP. In addition, resource utilization can be improved compared to when some signals are dropped at once without considering the capability of the UE (i.e., whether the STxMP is supported).

The operation of the proposal 5-3 may applied to i) when two signals overlap on both the time/frequency, or/and ii) when two signals do not overlap on the frequency and overlap on the time.

One or more combinations of the embodiments based on the proposals 1 to 5 may be applied to the operation of the UE/base station.

An example of the operation of the UE (or base station) based on at least one of the above-described embodiments (e.g., at least one of the proposals 1 to 5) is as follows.

1) The UE (base station) receives (transmits) a configuration related to two TAGs (two TAs) in a specific serving cell.
2) The UE (base station) receives (transmits) a message for scheduling an uplink transmission related to the two TAGs. The message may be signaling by RRC/MAC/DCI. For example, the message may be DCI.

The base station may perform a scheduling restriction based on at least one of the proposals 1 to 5 in the scheduling. For example, the message may include information related to the scheduling based on at least one of the proposals 1 to 5.

3) The UE transmits (receives) an uplink signal based on the message.

The transmission of the uplink signal may be performed based on at least one of the proposals 1 to 5.

For example, the uplink signal may include a first uplink signal (channel) related to a first TAG and a second uplink signal (channel) related to a second TAG. For example, (if some signals are dropped due to the collision), the UE may transmit the first uplink signal (channel) or the second uplink signal (channel) to the base station. For example, (if the collision occurs but transmission is performed without dropping), the UE may transmit the first uplink signal (channel) and the second uplink signal (channel) to the base station.

The UE/base station operations are only examples, and each operation (or step) is not necessarily required. The operations related to uplink transmission related to different TAs of the UE according to the above-described embodiments may be omitted or added based on the UE/base station implementation method.

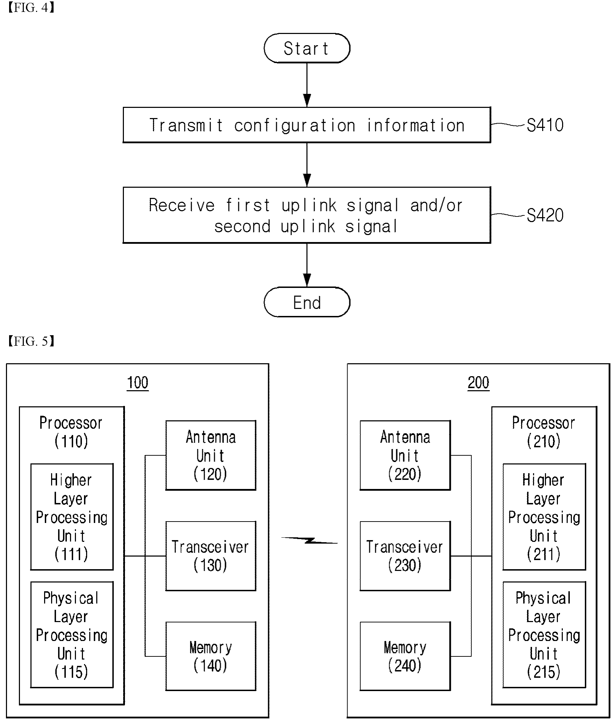

From an implementation perspective, operations of the UE/BS according to the above-described embodiments (e.g., operations based on at least one of the proposals 1 to 5) can be processed by a device (e.g., processors 110 and 210 of FIG. 5) of FIG. 6 to be described below.

Further, the operations of the UE/BS according to the above-described embodiments (e.g., operations based on at least one of the proposals 1 to 5) can be stored in a memory (e.g., memories 140 and 240 of FIG. 5) in the form of commands/programs (e.g., instructions, executable codes) for running at least one processor (e.g., processors 110 and 210 of FIG. 5).

Below, the above-described embodiments are described in detail from a UE/BS operation perspective with reference to FIGS. 3 and 4. Methods described below are merely distinguished for convenience of explanation. Thus, it is obvious that partial configuration of any method can be substituted or combined with partial configuration of another method.

FIG. 3 is a flowchart illustrating a method performed by a UE according to an embodiment of the present disclosure.

Referring to FIG. 3, a method performed by a user equipment (UE) according to an embodiment of the present disclosure includes a step S310 of receiving configuration information and a step S320 of transmitting a first uplink signal and/or a second uplink signal.

In the step S310, a UE receives configuration information from a base station.

Based on the configuration information, i) first COntrol REsource SETs (CORESETs) related to a first CORESET pool index and ii) second CORESETs related to a second CORESET pool index may be configured. For example, the configuration information may be based on PDCCH-config including a list of the CORESETs (controlResourceSetToAdd-ModList).

The first CORESETs may be related to a first TCI state. The second CORESETs may be related to a second TCI state.

The first TCI state may be related to a first timing advance group (TAG). The second TCI state may be related to a second timing advance group (TAG).

For example, each TAG has an association indicated based on tag-Id-ptr. Specifically, the first TAG may have an association with the first TCI state related to the first CORESETs. The second TAG may have an association with the second TCI state related to the second CORESETs.

In the step S320, the UE transmits a first uplink signal related to the first TAG and/or a second uplink signal related to the second TAG to the base station.

For example, at least one of the first uplink signal and the second uplink signal which overlap each other may be transmitted based on at least one of the above-described proposals 1 to 5. Specifically, i) the first uplink signal, ii) the second uplink signal, or iii) the first uplink signal and the second uplink signal may be transmitted. Cases corresponding to the i) to iii) are described in detail below.

The i) to ii) mean cases where a high priority signal is transmitted. Specifically, the high priority signal (e.g., the first uplink signal or the second uplink signal) may be transmitted. A low priority signal (e.g., the second uplink signal or the first uplink signal) may be i) dropped or ii) dropped (e.g., partially dropped) for an overlapped time duration.

The iii) means a case where two signals are transmitted without dropping or a case where a low priority signal among the two signals is partially dropped. For example, the first uplink signal and the second uplink signal may be transmitted (without dropping). For example, the first uplink signal or the second uplink signal with a high priority may be transmitted. The second uplink signal or the first uplink signal with a low priority may be transmitted in a resource region excluding the overlapped time duration.

In the examples described above, the priority may be based on at least one of the proposals 1 to 5.

The overlapping of the first uplink signal and the second uplink signal may mean that a first resource allocated/scheduled for the first uplink signal overlaps a second resource allocated/scheduled for the second uplink signal. The overlapping may mean that all or part of the first resource overlaps all or part of the second resource in a time domain and/or a frequency domain.

For example, each uplink signal may be a signal scheduled/triggered based on downlink control information (DCI). Specifically, each uplink signal may be a Physical Uplink Shared CHannel (PUSCH), a Physical Uplink Control CHannel (PUCCH), a Sounding Reference Signal (SRS), or a Physical Random Access CHannel (PRACH).

According to an embodiment, based on the first uplink signal and the second uplink signal being overlapped, the first uplink signal and/or the second uplink signal may be transmitted based on a rule. The rule may be related to a Simultaneous Transmission across Multiple Panels (STxMP).

More specifically, the rule may be defined based on at least one of i) a transmission start time of each uplink signal, ii) a scheduling time of each uplink signal, iii) a minimum processing time related to uplink (UL) cancellation, iv) an overlapped time duration of the first uplink signal and the second uplink signal, v) a capability of the UE related to the STxMP, and/or vi) a total transmission power related to the overlapped time duration. The present embodiment may be based on the proposal 5.

The transmission of the first uplink signal or the second uplink signal based on the rule may be premised on a (partial) drop of the second uplink signal or the first uplink signal based on the rule. In other words, the fact that a high priority signal (the first uplink signal or the second uplink signal) has been transmitted may mean that a low priority signal (the second uplink signal or the first uplink signal) has been dropped or partially dropped. The opposite case may be interpreted in the same manner. The fact that the low priority signal has been dropped or partially dropped may mean that the high priority signal has been transmitted.

The rule may be defined based on the proposal 5-3. This is described in detail below.

For example, based on i) the STxMP being supported by the UE, and ii) the total transmission power being less than or equal to a maximum transmission power of the UE: the first uplink signal and the second uplink signal may be transmitted. In such a case, uplink transmission may be performed without dropping/partial dropping of any one signal.

For example, based on i) the STxMP being supported by the UE, and ii) the total transmission power being greater than the maximum transmission power of the UE: the first uplink signal or the second uplink signal may be transmitted. That is, the high priority signal (the first uplink signal or the second uplink signal) may be transmitted, and the low priority signal (the second uplink signal or the first uplink signal) may be i) dropped or ii) dropped in the overlapped time duration.

For example, based on i) the STxMP being supported by the UE, and ii) the total transmission power being greater than the maximum transmission power of the UE: the first uplink signal and the second uplink signal may be transmitted. In this instance, power scaling may be performed on the first uplink signal (or the second uplink signal) with a lower priority so that the total transmission power does not exceed the maximum transmission power of the UE. Specifically, a lower priority signal among the first uplink signal and the second uplink signal may be transmitted based on a scaled transmission power. The scaled transmission power may be lower than a transmission power configured/indicated/determined for transmission of the corresponding signal.

The rule may be defined based on the proposal 5-1. This is described in detail below.

For example, a signal with an earlier transmission start time among the overlapped signals may be transmitted. Specifically, based on a transmission start time of the first uplink signal or the second uplink signal being earlier than a transmission start time of the second uplink signal or the first uplink signal, the first uplink signal or the second uplink signal may be transmitted. That is, a high priority signal (the first uplink signal or the second uplink signal with an earlier transmission start time) may be transmitted, and a low priority signal (the second uplink signal or the first uplink signal with a later transmission start time) may be i) dropped or ii) dropped in the overlapped time duration.

For example, a signal with an earlier scheduling time among the overlapped signals may be transmitted. Specifically, based on a scheduling time of the first uplink signal or the second uplink signal being earlier than a scheduling time of the second uplink signal or the first uplink signal, the first uplink signal or the second uplink signal may be transmitted. That is, a high priority signal (the first uplink signal or the second uplink signal with an earlier scheduling time) may be transmitted, and a low priority signal (the second uplink signal or the first uplink signal with a later scheduling time) may be i) dropped or ii) dropped in the overlapped time duration.

For example, a signal for which a minimum processing time related to UL cancellation is not guaranteed among the overlapped signals may be transmitted. Specifically, based on the transmission start time of the first uplink signal or the second uplink signal being earlier than time based on the minimum processing time, the first uplink signal or the second uplink signal may be transmitted. That is, the first uplink signal or the second uplink signal for which the minimum processing time related to the UL cancellation is not guaranteed may be transmitted. The second uplink signal or the first uplink signal for which the minimum processing time related to the UL cancellation is guaranteed (i.e., a signal in which the transmission start time is later than the time based on the minimum processing time) may be i) dropped or ii) dropped in the overlapped time duration.

The rule may be defined based on the proposal 5-2. This is described in detail below.

For example, if the overlapped time duration is CP (or below a certain level), all the two signals may be transmitted without dropping.

Specifically, based on the overlapped time duration being a cyclic prefix (CP) related to the first uplink signal or the second uplink signal, the first uplink signal and the second uplink signal may be transmitted. In this instance, the first uplink signal or the second uplink signal may not be transmitted in the CP. That is, the first uplink signal or the second uplink signal may be transmitted in a resource region excluding the CP.

According to an embodiment, the rule may be applied to signals based on dynamic scheduling. Signals based on other combinations (e.g., semi-static & semi-static or dynamic & semi-static) may be scheduled so as not to overlap. This is described below.

For example, the rule may be applied to the first uplink signal and the second uplink signal based on dynamic scheduling. The present embodiment may be based on the proposal 1.

For example, the first uplink signal and the second uplink signal based on semi-static scheduling may be scheduled so as not to overlap each other.

For example, i) the first uplink signal or the second uplink signal based on the dynamic scheduling may be scheduled so as not to overlap ii) the second uplink signal or the first uplink signal based on the semi-static scheduling.

According to an embodiment, the first uplink signal may be based on a first uplink timing related to the first TAG. The second uplink signal may be based on a second uplink timing related to the second TAG.

In the examples/embodiments described above, when any one signal (the first uplink signal or the second uplink signal) is transmitted based on the rule, the remaining signal (the second uplink signal or the first uplink signal) may be dropped or partially dropped.

Specifically, the first uplink signal or the second uplink signal with a high priority may be transmitted. The second uplink signal or the first uplink signal with a low priority may be i) dropped or ii) dropped in the overlapped time duration.

The method may further include a step of receiving configuration information related to a TAG. In the step, the UE receives configuration information related to the TAG from the base station. The configuration information related to the TAG (e.g., TAG-Config of Table 7) may include information on the first TAG and the second TAG.

The operations based on the steps S310 and S320 and the step of receiving the configuration information related to the TAG described above may be implemented by a device of FIG. 5. For example, a UE 200 may control one or more transceivers 230 and/or one or more memories 240 so as to perform the operations based on the steps S310 and S320 and the step of receiving the configuration information related to the TAG.

Below, the above-described embodiments are described in detail from a perspective of base station operation.

Steps S410 and S420 and a step of transmitting configuration information related to a TAG described below correspond to the steps S310 and S320 and the step of receiving the configuration information related to the TAG described with reference to FIG. 3. Considering the above correspondence, redundant description is omitted. That is, the detailed description of the base station operation described below can be replaced with the description/embodiment of FIG. 3 corresponding to the base station operation.

For example, the description/embodiment of the steps S310 and S320 of FIG. 3 may be additionally applied to the base station operation of the steps S410 and S420 described below.

For example, the description/embodiment of the step of receiving the configuration information related to the TAG may be additionally applied to the base station operation of the step of transmitting the configuration information related to the TAG described below.

FIG. 4 is a flowchart illustrating a method performed by a base station according to another embodiment of the present disclosure.

Referring to FIG. 4, a method performed by a base station according to another embodiment of the present disclosure includes a step S410 of transmitting configuration information and a step S420 of receiving a first uplink signal and/or a second uplink signal.

In the step S410, a base station transmits configuration information to a UE.

In the step S420, the base station receives a first uplink signal related to a first TAG and/or a second uplink signal related to a second TAG from the UE.

The method may further include a step of transmitting configuration information related to a TAG. In the step, the base station transmits configuration information related to the TAG to the UE.

The operations based on the steps S410 and S420 and the step of transmitting the configuration information related to the TAG described above may be implemented by a device of FIG. 5. For example, a base station 100 may control one or more transceivers 130 and/or one or more memories 140 so as to perform the operations based on the steps S410 and S420 and the step of transmitting the configuration information related to the TAG.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) in a wireless communication system, the method comprising:

   receiving configuration information,
   wherein based on the configuration information, i) first COntrol REsource SETs (CORESETs) related to a first CORESET pool index and ii) second CORESETs related to a second CORESET pool index are configured,
   wherein the first CORESETs are related to a first TCI state, and the second CORESETs are related to a second TCI state,
   wherein the first TCI state is related to a first timing advance group (TAG), and the second TCI state is related to a second TAG; and

transmitting a first uplink signal related to the first TAG and/or a second uplink signal related to the second TAG, wherein based on the first uplink signal and the second uplink signal being overlapped, the first uplink signal and/or the second uplink signal are transmitted based on a rule,

wherein the rule is related to a Simultaneous Transmission across Multiple Panels (STxMP).

2. The method of claim 1, wherein the rule is defined based on at least one of i) a transmission start time of each uplink signal, ii) a scheduling time of each uplink signal, iii) a minimum processing time related to an uplink (UL) cancellation, iv) an overlapped time duration of the first uplink signal and the second uplink signal, v) a capability of the UE related to the STxMP, and/or vi) a total transmission power related to the overlapped time duration.

3. The method of claim 2, wherein based on i) the STxMP being supported by the UE, and ii) the total transmission power being less than or equal to a maximum transmission power of the UE: the first uplink signal and the second uplink signal are transmitted.

4. The method of claim 2, wherein based on i) the STxMP being supported by the UE, and ii) the total transmission power being greater than a maximum transmission power of the UE: the first uplink signal or the second uplink signal is transmitted.

5. The method of claim 2, wherein based on i) the STxMP being supported by the UE, and ii) the total transmission power being greater than a maximum transmission power of the UE:

the first uplink signal and the second uplink signal are transmitted, and
a lower priority signal among the first uplink signal and the second uplink signal is transmitted based on a scaled transmission power.

6. The method of claim 2, wherein based on a transmission start time of the first uplink signal or the second uplink signal being earlier than a transmission start time of the second uplink signal or the first uplink signal: the first uplink signal or the second uplink signal is transmitted.

7. The method of claim 2, wherein based on a scheduling time of the first uplink signal or the second uplink signal being earlier than a scheduling time of the second uplink signal or the first uplink signal: the first uplink signal or the second uplink signal is transmitted.

8. The method of claim 2, wherein based on a transmission start time of the first uplink signal or the second uplink signal being earlier than a time based on the minimum processing time: the first uplink signal or the second uplink signal is transmitted.

9. The method of claim 2, wherein based on the overlapped time duration being a cyclic prefix (CP) related to the first uplink signal or the second uplink signal: the first uplink signal and the second uplink signal are transmitted.

10. The method of claim 9, wherein the first uplink signal or the second uplink signal is transmitted in a resource region excluding the CP.

11. The method of claim 1, wherein the rule is applied to the first uplink signal and the second uplink signal based on a dynamic scheduling.

12. The method of claim 1, wherein the first uplink signal and the second uplink signal based on a semi-static scheduling are scheduled so as not to overlap each other.

13. The method of claim 1, wherein i) the first uplink signal or the second uplink signal based on a dynamic scheduling is scheduled so as not to overlap ii) the second uplink signal or the first uplink signal based on a semi-static scheduling.

14. The method of claim 1, wherein the first uplink signal is based on a first uplink timing related to the first TAG, and wherein the second uplink signal is based on a second uplink timing related to the second TAG.

15. The method of any one of claims 4, 6, 7 and 8, wherein the first uplink signal or the second uplink signal with a high priority is transmitted, and

wherein the second uplink signal or the first uplink signal with a low priority is i) dropped or ii) dropped in the overlapped time duration.

16. A user equipment operating in a wireless communication system, the user equipment comprising:

   one or more transceivers;
   one or more processors; and
   one or more memories connected to the one or more processors and storing instructions,
   wherein the instructions configure the one or more processors to perform all steps of a method according to any one of claims 1 to 15 based on being executed by the one or more processors.

17. A device comprising:

   one or more memories; and
   one or more processors operably connected to the one or more memories,
   wherein the one or more memories store instructions that configure the one or more processors to perform all steps of a method according to any one of claims 1 to 15 based on being executed by the one or more processors.

18. One or more non-transitory computer readable mediums storing instructions,
   wherein the instructions executable by one or more processors configure the one or more processors to perform all steps of a method according to any one of claims 1 to 15.

19. A method performed by a base station in a wireless communication system, the method comprising:

   transmitting configuration information,
   wherein based on the configuration information, i) first COntrol REsource SETs (CORESETs) related to a first CORESET pool index and ii) second CORESETs related to a second CORESET pool index are configured,
   wherein the first CORESETs are related to a first TCI state, and the second CORESETs are related to a second TCI state,
   wherein the first TCI state is related to a first timing advance group (TAG), and the second TCI state is related to a second TAG; and
   receiving a first uplink signal related to the first TAG and/or a second uplink signal related to the second TAG,
   wherein based on the first uplink signal and the second uplink signal being overlapped, the first uplink signal and/or the second uplink signal are received based on a rule,
   wherein the rule is related to a Simultaneous Transmission across Multiple Panels (STxMP).

20. A base station operating in a wireless communication system, the base station comprising:

   one or more transceivers;
   one or more processors; and
   one or more memories connected to the one or more processors and storing instructions,
   wherein the instructions configure the one or more processors to perform all steps of a method according to claim 19 based on being executed by the one or more processors.

【FIG. 1】

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

【FIG. 2】

| | | |
|---|---|---|
| TAG ID | Timing Advance Command | Oct 1 |

【FIG. 3】

```
            Start
              │
              ▼
  Receive configuration information  ── S310
              │
              ▼
  Transmit first uplink signal and/or  ── S320
       second uplink signal
              │
              ▼
             End
```

【FIG. 4】

```
                    ( Start )
                        │
                        ▼
┌─────────────────────────────────────────────┐
│  Transmit configuration information          │───S410
└─────────────────────────────────────────────┘
                        │
                        ▼
┌─────────────────────────────────────────────┐
│  Receive first uplink signal and/or          │───S420
│  second uplink signal                        │
└─────────────────────────────────────────────┘
                        │
                        ▼
                    ( End )
```

【FIG. 5】

## INTERNATIONAL SEARCH REPORT

| International application No. |
| --- |
| **PCT/KR2024/001531** |

| | |
| --- | --- |
| **A.** | **CLASSIFICATION OF SUBJECT MATTER** |

**H04W 72/56**(2023.01)i; **H04W 72/12**(2009.01)i; **H04W 72/231**(2023.01)i; **H04W 72/232**(2023.01)i; **H04W 56/00**(2009.01)i; **H04W 72/21**(2023.01)i; **H04W 52/28**(2009.01)i; **H04L 5/00**(2006.01)i; **H04W 74/08**(2009.01)i

According to International Patent Classification (IPC) or to both national classification and IPC

| | |
| --- | --- |
| **B.** | **FIELDS SEARCHED** |

Minimum documentation searched (classification system followed by classification symbols)

H04W 72/56(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: uplink(UL), CORESET(control resource set), pool, index, unified, TCI state, TAG(timing advance group), TA(timing advance), time, alignment, MAC-CE, STxMP(Simultaneous Transmission across Multiple Panels), overlap

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | WO 2021-253056 A2 (FUTUREWEI TECHNOLOGIES, INC.) 16 December 2021 (2021-12-16)<br>See paragraphs [0088] and [0138]; and claims 1 and 5. | 1-2,6-7,11-20 |
| A | | 3-5,8-10 |
| Y | CATT. Discussion on two TAs for UL multi-DCI for multi-TRP operation. R1-2211168. 3GPP TSG RAN WG1 #111. Toulouse, France. 07 November 2022.<br>See sections 4-5. | 1-2,6-7,11-20 |
| Y | SAMSUNG. Views on two TAs for m-DCI. R1-2212027, 3GPP TSG RAN WG1 #111. Toulouse, France. 07 November 2022.<br>See section 2.4. | 12-13 |
| A | LG ELECTRONICS. Two TAs for multi-TRP/panel. R1-2211860, 3GPP TSG RAN WG1 #111. Toulouse, France. 07 November 2022.<br>See section 2. | 1-20 |

☑ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **30 April 2024** | **30 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 661 574 A1**

**INTERNATIONAL SEARCH REPORT**

International application No.

**PCT/KR2024/001531**

### C. DOCUMENTS CONSIDERED TO BE RELEVANT

| Category* | Citation of document, with indication, where appropriate, of the relevant passages | Relevant to claim No. |
|---|---|---|
| A | ZTE. TA enhancement for multi-DCI. R1-2210936, 3GPP TSG RAN WG1 Meeting #111. Toulouse, France. 07 November 2022. See section 2. | 1-20 |

Form PCT/ISA/210 (second sheet) (July 2022)

INTERNATIONAL SEARCH REPORT
Information on patent family members

International application No.

**PCT/KR2024/001531**

| Patent document cited in search report | | | Publication date (day/month/year) | Patent family member(s) | | | Publication date (day/month/year) |
|---|---|---|---|---|---|---|---|
| WO | 2021-253056 | A2 | 16 December 2021 | CN | 116325980 | A | 23 June 2023 |
| | | | | EP | 4229933 | A2 | 23 August 2023 |
| | | | | US | 2023-0239823 | A1 | 27 July 2023 |
| | | | | WO | 2021-253056 | A3 | 17 March 2022 |

Form PCT/ISA/210 (patent family annex) (July 2022)